# EUROPEAN PATENT APPLICATION

(11) **EP 0 823 583 A1**
(43) Date of publication of application: **11.02.1998**
(21) Application number: 97305834.0
(22) Date of filing: 01.08.1997
(51) Int. Cl.: F16M 11/06

(54) **Locking mechanism for rotatable assembly**

(30) Priority: 09.08.1996 GB 9616777
(71) Applicant: Small, Harold Douglas, Droitwich, Worcestershire WR9 7RR (GB); Small, Ian Keith, Droitwich, Worcestershire WR9 7RR (GB)
(72) Inventor: Small, Harold Douglas, Droitwich, Worcestershire WR9 7RR (GB); Small, Ian Keith, Droitwich, Worcestershire WR9 7RR (GB)
(74) Representative: Jackson, Derek Charles

(57) **Abstract**

A locking mechanism is provided for a rotatable assembly which comprises a substantially cylindrical member (3) and a split member (5) incorporating a slit (9) therein. The split member extends around the substantially cylindrical member and defines an internal surface corresponding substantially to the dimensions of the cylindrical member. The locking mechanism comprises an elongate actuating member (17) which engages directly or indirectly with part of the split member (5) for controlling opening and closing of the slit (9) between first and second positions. The locking mechanism further comprises means, such as a pushbutton (27), for deflecting the elongate actuating member (17) intermediate the ends thereof between first and second positions. Thus, in the first position of the elongate actuating member (17) the slit (9) in the split member (5) is in the first position thereof so as to permit relative rotation between the split member (5) and the cylindrical member (3) and in the second position of the elongate actuating member (17) the slit (9) in the split member (5) is in the second position thereof so as to lock the split member against the cylindrical member (3).

## Description

The present invention relates to a locking means for a rotatable assembly and, more specifically but not exclusively, is concerned with a locking means for a tilt mechanism of a pan and tilt mechanism.

Pan and tilt mechanisms are well known in tripod and like assemblies for use with a wide range of photographic, optical and audio equipment, such as cameras of various types, binoculars, telescopes and microphones. The pan and tilt mechanism allows the equipment to be panned (rotated about an upright axis) and tilted (rotated about a horizontal axis) by the user. Conventionally, the tilt mechanism can be locked at an angle selected by the user, for example to permit panning at the angle. However, the locking mechanism employed generally involves rotating a handle which is employed by the user to control movement of the equipment and unlocking or locking of the tilt mechanism often results in an undesirable disturbance of the equipment. There is therefore a requirement for a tilt mechanism which can be unlocked or locked without disturbing the equipment which is being employed by the user.

According to the present invention there is provided a locking means for a rotatable assembly comprising a substantially cylindrical member and a split member incorporating a slit therein and extending around the substantially cylindrical member and defining an internal surface corresponding substantially to the dimensions of the cylindrical member, the locking means comprising an elongate actuating member engaging directly or indirectly with part of the split member for controlling opening and closing of the slit between first and second positions, and means for deflecting the elongate actuating member intermediate the ends thereof between first and second positions, wherein in the first position of the elongate actuating member the slit in the split member is in the first position thereof so as to permit relative rotation between the split member and the cylindrical member and in the second position of the elongate actuating member the slit in the split member is in the second position thereof so as to lock the split member against the cylindrical member.

Thus, the first and second positions of the slit may refer to relatively wider and narrower configurations thereof.

Preferably the slit extends in the axial direction of the cylindrical member from the internal surface to the exterior of the split member.

In the first position of the elongate actuating member, the actuating member may allow the slit in the split member to remain in the first position thereof and in the second position of the elongate actuating member, the actuating member may urge the slit to the second position thereof.

The elongate actuating member may be provided within an arm for effecting relative rotation of the split member and the cylindrical member. Movement of the elongate actuating member intermediate the ends thereof may be effected by means of an operating button which may be mounted, for example, in the arm. The elongate actuating member may pass through an aperture in the operating button. Means may be provided for biasing the elongate actuating member to the second position thereof, for example by biasing the operating button.

Means, such as a threaded screw member, may be provided for adjusting the elongate actuating member.

The elongate actuating member may engage with the part of the split member by way of a lever arm. The lever arm may increase the biasing force against the part of the split member. The lever arm may be substantially L-shaped. The elongate actuating member may be received in the region of a free end of one leg of the lever arm and the free end of the other leg of the lever arm may engage with the part of the split member. The other leg of the lever arm may engage with the part of the split member by way of a threaded member which passes through a further part of the split member and is threaded into the first-mentioned part.

In the second position thereof the elongate actuating means may be generally straight and in the first position thereof the elongate actuating means may be curved.

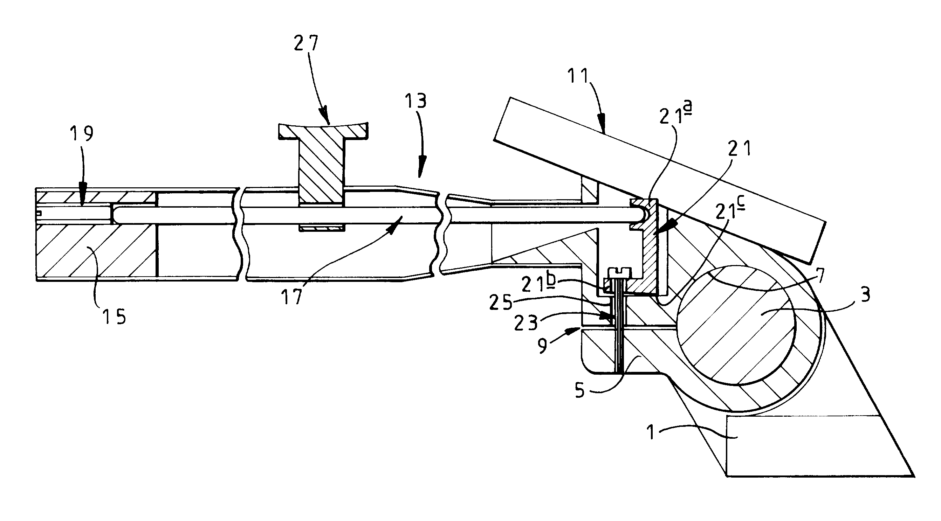

For a better understanding of the present invention and to show more clearly how it may be carried into effect reference will now be made, by way of example, to the accompanying figure which is a cross-sectional view of one embodiment of a locking mechanism according to the present invention for use with a rotatable assembly in the form of a tilt mechanism.

The locking mechanism shown in the figure is illustrated as forming part of a tilt mechanism which is conventionally provided in a tripod intended for photographic or like purposes. However, the locking mechanism is not restricted to use either in a tilt mechanism or in a tripod and can be used in any application where a member is rotatable about a shaft and it is desired to be able to releasably lock the member to the shaft in any one of a number of alternative rotational positions.

The figure shows an autolock tilt head for a tripod or the like comprising a spindle body 1 for mounting at the upper end of a tripod in a manner such that the spindle body can be rotated (panned) about an upright axis by a conventional pan mechanism (not shown). Pan mechanisms are well known and require no further description herein. The spindle body incorporates a laterally extending cylindrical member 3 defining a tilt axis.

Extending around the cylindrical member 3 is a split block 5 which provides a substantially cylindrical internal surface 7, the block 5 being provided with a slit 9 which extends in the axial direction of the cylindrical surface from the surface 7 to the exterior of the block. The purpose of the slit 9 will be explained in more detail hereinafter.

The split block 5 is also provided with an equipment mount 11 of conventional type and which need not be described in more detail herein.

As is usual with tilt mechanisms, an arm 13 is provided on the split block 5 to permit the user to control the direction (both pan and tilt) in which the equipment (not shown) is to be pointed. If desired, the free end of the arm may be formed with or may be provided with a hand grip (not shown).

As can be seen from the figure, the arm 13 is hollow and is provided at that end thereof remote from the split block 5 with a mounting means 15 for one end of an elongate actuating rod 17 of a locking mechanism. The cross-sectional configuration of the arm 13 may be, for example, substantially circular or substantially oval. The actuating rod is retained in the mounting means in a manner which inhibits movement thereof transverse to the axial direction of the rod. The mounting means effectively closes the free end of the arm 13 and is provided with an adjusting screw 19 for adjusting the axial position of the actuating rod 17 relative to the mounting means. The other end of the elongate actuating rod 17 is received in the region of a free end of one leg 21a of a generally L-shaped lever arm 21 which is positioned within a recess formed in the split block 5. The actuating rod 17 is received in a recess provided in the leg of the lever arm 21 to ensure the actuating rod is retained in a manner which inhibits movement in a direction transverse to the axial direction thereof. The other leg 21b of lever arm 21 is provided with a aperture therethrough and is secured to the split block 5 by means of a threaded screw 23. The screw 23 passes through the aperture in the leg 21b with clearance. The threaded screw 23 is generally perpendicular to the plane of the slit 9 in the split block and passes therethrough. That part of the split block intermediate the slit 9 and the lever arm 21 is provided with an aperture 25 which is greater than the cross-section of the threaded screw 23 and the screw 23 therefore does not engage therewith, but that part of the split block on that side of the slit 9 remote from the lever arm 21 is threaded to receive the screw 23.

The relative lengths of the legs 21a and 21b can be selected to adjust the biasing force required from the actuating rod to effect movement of the lever arm 21. In practice, it has been found useful for the leg 21a to be about twice the length of the leg 21b.

In the configuration shown in the figure the actuating rod 17 is under compression and urges the leg 21a of the lever arm 21 so as to pivot around the junction 21c between the legs 21a and 21b and to lift the free end of the leg 21b away from the surface of the split block 5. This in turn urges the screw 23 in a direction such as to close the slit 9.

Arm 13 is provided intermediate the ends thereof with an operating button 27 which extends in a slidable manner through the arm and engages with the actuating rod 17 in a manner which, when the button 27 is depressed, deflects part of the actuating rod intermediate the ends thereof. For example, the actuating rod 17 may pass through an aperture provided in the operating button. Where actuating rod 17 is made of a resilient material such as spring steel or a resilient plastics material, when the button is released the rod 17 will tend to return to a generally straight configuration and thus return the operating button to a raised position. Alternatively, biasing means (not shown) can be provided to return the rod 17 to a generally straight configuration and the button 27 to a raised position. In practice, the actuating rod may not be entirely straight when the operating button is in the raised position to ensure that the split block 5 is urged in a direction tending to close the slit 9.

In operation, the locking mechanism is biased as explained above to a configuration in which the actuating rod 17 is generally straight with the operating button 27 in a raised position as shown in the figure. In this configuration, the actuating rod 17 urges the leg 21a of the lever arm 21 so as to pivot around the junction 21c between the legs 21a and 21b and to lift the free end of the leg 21b away from the surface of the split block 5 as described hereinabove, thereby tending to close the slit 9. In this configuration, the width of the slit 9 and the diameters of the cylindrical member 3 and of the surface 7 are such that the surface 7 engages against the cylindrical member 3 and friction therebetween inhibits relative movement.

When the operating button 27 is depressed, for example by a user's thumb, to deflect the intermediate region of the actuating rod 17, the effect of this is to reduce the spacing between the ends of the actuating rod and to allow the lever arm 21 to pivot around the junction 21c so as to allow the slit 9 to widen. This effectively releases the frictional forces between the cylindrical member 3 and the surface 7 and allows the split block 5 to rotate about the cylindrical member until such time as the operating button is released whereupon the split block is automatically locked in position.

Frictional grip between the cylindrical member 3 and the surface 7, and the point at which the frictional force is applied when the operating button 27 is released, can be adjusted by means of the adjusting screw 19. The adjusting screw 19 in combination with the screw 23 eliminate the need for very fine tolerances in manufacture of the locking mechanism. Similarly the adjusting screw can be used to compensate for any wear in the mechanism.

Rotation between the split block 5 and the cylindrical member 3 can be further inhibited when the operating button is released by the provision of axially extending splines (not shown) on one or both of the cylindrical member 3 and the surface 7.

The locking mechanism according to the present invention is particularly easy to use. It requires only one hand to operate the arm 13 and the button 27, while should the arm be released for any reason the locking mechanism is automatically brought into action to prevent undesired rotational movement of equipment which could result in damage to equipment or personal injury. Because no rotational movement is required to actuate or release the locking mechanism, the user can readily maintain accurate targeting of a subject.

## Claims

1. A locking means for a rotatable assembly comprising a substantially cylindrical member (3) and a split member (5) incorporating a slit (9) therein and extending around the substantially cylindrical member and defining an internal surface corresponding substantially to the dimensions of the cylindrical member, characterised in that the locking means comprises an elongate actuating member (17) engaging directly or indirectly with part of the split member (5) for controlling opening and closing of the slit (9) between first and second positions, and means (27) for deflecting the elongate actuating member (17) intermediate the ends thereof between first and second positions, wherein in the first position of the elongate actuating member (17) the slit (9) in the split member (5) is in the first position thereof so as to permit relative rotation between the split member (5) and the cylindrical member (3) and in the second position of the elongate actuating member (17) the slit in the split member (5) is in the second position thereof so as to lock the split member against the cylindrical member (3).

2. A locking means as claimed in claim 1, characterised in that the slit (9) extends in the axial direction of the cylindrical member (3) from the internal surface to the exterior of the split member (5).

3. A locking means as claimed in claim 1 or 2, characterised in that, in the first position of the elongate actuating member (17), the actuating member allows the slit (9) in the split member (5) to remain in the first position thereof and, in the second position of the elongate actuating member (17), the actuating member urges the slit (9) to the second position thereof.

4. A locking means as claimed in claim 1, 2 or 3, characterised in that the elongate actuating member (17) is provided within an arm (13) for effecting relative rotation of the split member (5) and the cylindrical member (3).

5. A locking means as claimed in any preceding claim, characterised in that movement of the elongate actuating member (17) intermediate the ends thereof is effected by means of an operating button (27), for example mounted in the arm (13).

6. A locking means as claimed in claim 5, characterised in that the elongate actuating member (17) passes through an aperture in the operating button (27).

7. A locking means as claimed in any preceding claim, characterised in that means is provided for biasing the elongate actuating member, and optionally the operating button (27), to the second position thereof.

8. A locking means as claimed in any preceding claim, characterised in that means, such as a screw threaded member (19), is provided for adjusting the elongate actuating member (17).

9. A locking means as claimed in any preceding claim, characterised in that the elongate actuating member (17) engages with the part of the split member (5) by way of a lever arm (21) which may be substantially L-shaped, which lever arm may optionally increase the biasing force against the part of the split member.

10. A locking means as claimed in claim 9, characterised in that the elongate actuating member (17) is received in the region of a free end of one leg (21a) of the lever arm (21) and the free end of the other leg (21b) of the lever arm engages with the part of the split member (5), for example by way of a threaded member which passes through a further part of the split member and is threaded into the first-mentioned part.

11. A locking means as claimed in any preceding claim, characterised in that in the second position thereof the elongate actuating means (17) is generally straight and in the first position thereof the elongate actuating means is curved.
